# EUROPEAN PATENT APPLICATION

(11) **EP 4 242 374 A1**
(43) Date of publication of application: **13.09.2023**
(21) Application number: 21823459.9
(22) Date of filing: 18.03.2021
(51) Int. Cl.: E01B 3/44, C08K 3/22, B29C 48/00, C08L 97/02, C08L 83/00, C08K 5/092, C08K 5/098, C08L 101/00, B29K 23/00, B29K 25/00

(54) **RAILROAD WOOD TIE CONTAINING PLASTIC WASTE**

(30) Priority: 09.11.2020 KR 20200148282
(71) Applicant: Caris Co., Ltd., Uijeongbu-si Gyeonggi-do 11649 (KR)
(72) Inventor: YU, Cheol, Uijeongbu-si, Gyeonggi-do 11624 (KR); SHIN, Kwan Woo, Yuseong-gu, Daejeon 34033 (KR)
(74) Representative: Cabinet Chaillot
(86) International application number: PCT/KR2021/003324
(87) International publication number: WO 2022/097847

(57) **Abstract**

The present invention relates to a railway sleeper including plastic waste. The railway sleeper is characterized by including plastic waste, wooden particles, and a binder, wherein the binder includes 1 to 3 parts by weight of oxalic acid, 0.5 to 2 parts by weight of sodium hydroxide, 0.1 to 0.5 parts by weight of sodium acetate, and 15 to 20 parts by weight of silicone oil.

## Description

### [Technical Field]

The present invention relates to a railway sleeper including plastic waste, and more particularly, to a railway sleeper having improved strength, which is composed of a composite material including wooden flour and plastic waste.

### [Background Art]

Wooden sleepers have been mainly used as railway sleepers. Also, concrete sleepers, precast concrete (PC concrete) sleepers, plastic sleepers, and the like have been used. The wooden sleepers have a problem in that they should be regularly replaced due to their short life span. Also, sleepers made of a concrete material have high strength and good durability, but have a drawback in that they are difficult to transport and handle, and are vulnerable to vibrations in terms of the characteristics of a ceramic material. Therefore, the concrete sleepers are manufactured by adding a reinforcing material such as steel bars, wire mesh, and the like. However, in this case, the concrete sleepers have drawbacks in that a separation phenomenon occurs at the interface between iron and concrete, and corrosion of the steel bars and increases in noise and vibrations may be caused in this procedure.

Therefore, sleepers made of a plastic material are being developed. For example, Korean Patent Publication No. 10-1987629 discloses a railway sleeper which is manufactured by sorting a waste plastic product made of a polyethylene or polypropylene material from among waste plastic products, pulverizing the waste plastic product into pieces of plastic waste, drying the pieces of plastic waste, mixing a shrinkage inhibitor with an antifoaming agent to prepare a blending raw material, putting the blending raw material into a primary extruder, heating and melting the blending raw material, cutting the primarily extruded resin into fine pieces to remove bubbles, putting the primarily extruded resin into a secondary extruder, heating and melting the primarily extruded resin, and secondarily shaping the molten resin in a shaping mold.

Also, Korean Patent Publication No. 10-2155019 discloses a railway sleeper which is shaped by extruding a mixed material, which is obtained by mixing 30 to 40 parts by weight of recyclable plastic waste in which polypropylene waste and polyethylene waste are mixed, 25 to 35 parts by weight of domestic plastic waste mixed without sorting kinds of plastic waste including PE, PP, PVC, PET, and the like, 25 to 35 parts by weight of a filler including pond ash or steel slag, 3 to 5 parts by weight of an antistatic agent, and 5 to 8 parts by weight of an antifoaming agent, in an extruder.

Because such a railway sleeper is made of a plastic material, the strength and durability of the railway sleeper may be improved by the manufacturing method. However, the railway sleeper has problems in that it has inferior physical properties, compared to railway sleepers made of a concrete material, and has a frequent replacement period due to the vulnerability to damage.

The applicant has developed a high-strength resin guardrail manufactured using a binder in the form of a microcapsule as in disclosed in Korean Patent Publication No. 10-2024543. Because a bonding force is improved due to the use of such a binder in a manufacturing process of extrusion-molding a resin composition including PVC and ABS, PVC and ABS, which are known to have poor compatibility, are blended to form a molded body. In this case, the manufactured molded body has an effect of improving durability and impact resistance.

### [Disclosure]

### [Technical Problem]

The present invention is designed to solve the above problems, and it is an object of the present invention to provide a railway sleeper having improved strength when the railway sleeper is manufactured using wooden flour and plastic waste.

It is another object of the present invention to provide a railway sleeper capable of enhancing a bonding force between wooden flour and plastic waste to recycle various types of plastic waste.

### [Technical Solution]

According to one aspect of the present invention, there is provided a railway sleeper, which includes plastic waste, wooden particles, and a binder, wherein the binder includes 1 to 3 parts by weight of oxalic acid, 0.5 to 2 parts by weight of sodium hydroxide, 0.1 to 0.5 parts by weight of sodium acetate, and 15 to 20 parts by weight of silicone oil.

In this case, the wooden particles may include one selected from wooden flour, wooden flour waste, rice husk, corn sludge, palm residue, or a mixture thereof, and the plastic waste may include one selected from polyethylene, polypropylene, polystyrene, polyethylene terephthalate, polyvinyl chloride, or a mixture thereof.

Also, any one or more new materials selected from polyethylene, polypropylene, polystyrene, polyethylene terephthalate, polyvinyl chloride, and the like may be further mixed. In this case, the plastic waste and the new material may be mixed at a weight ratio of 0.5: 1 to 1:0.5.

### [Advantageous Effects]

A railway sleeper according to the present invention exhibits an effect of improving strength when the railway sleeper is manufactured using wooden flour and plastic waste.

Also, because a bonding force between wooden flour and plastic waste can be enhanced to bond the wooden flour to various types of plastic wastes the railway sleeper exhibits an effect of recycling various types of plastic waste.

### [Best Mode]

Hereinafter, the present invention will be described in detail. Terms or words used in the present specification and the claims are not to be interpreted limitedly to common or dictionary definitions, and should be interpreted as meanings and concepts corresponding to technical ideas of the present invention based on the principle that the inventors may suitably define the concepts of terms in order to describe the invention in the best possible way.

A railway sleeper according to the present invention includes plastic waste, wooden particles, and a binder. Here, the binder is characterized by including 1 to 3 parts by weight of oxalic acid, 0.5 to 2 parts by weight of sodium hydroxide, 0.1 to 0.5 parts by weight of sodium acetate, and 15 to 20 parts by weight of silicone oil.

The binder serves to improve a bonding force between the plastic and wooden particles and allow the wooden particles to form an interfacial bond with the plastic in a process of shape-processing the railway sleeper. Also, an interfacial bond in plastic waste in which polymers made of heterologous materials are mixed may be formed by the use of the binder. In this way, the strength required for the railway sleeper may be achieved as the problems of a composite material such as a decrease in strength caused by insufficient compatibility when the composite material is shape-processed.

Technology for manufacturing a molded body using such a binder is based on the same concept as in microcapsules disclosed in Korean Patent Publication No. 10-2024543 filed by the applicant. In the related art, a molded body obtained by blending PVC and ABS, which are generally difficult to shape-process due to low compatibility, is manufactured using the microcapsules as the binder.

Also, the binder is disclosed in Korean Patent Publication Nos. 10-1796261, 10-1796263, and the like. When a molded body is manufactured using a cellulose-based material such as wood, and the like, a binder including an acid, a peroxide, a metal catalyst, and a non-reactive oil is used. That is, a principle in which a bonding reaction between cellulose molecules occurs by allowing an acid to react with a base in a shaping process is used.

Although this concept of the related art is applied to the present invention, various factors should be taken into consideration unlike the related art because the wooden particles are bonded to the plastic waste via an interfacial reaction.

In the present invention, any one selected from polyethylene, polypropylene, polystyrene, polyethylene terephthalate, polyvinyl chloride, or a mixture thereof, which is generally obtained, may be used as the plastic waste, but the present invention is not particularly limited thereto. In the present invention, because the interfacial reaction occurs using the binder, shape-processing is possible without sorting the plastic waste by type.

Also, when a molded article is generally manufactured using the plastic waste, a new material is often mixed with the plastic waste to enhance processability. Therefore, any one selected from polyethylene, polypropylene, polystyrene, polyethylene terephthalate, polyvinyl chloride, or a mixture thereof may also be added and used as the new material, depending on the type or state of the plastic waste. When the new material is mixed with the plastic waste, and used, the new material and the plastic waste may be mixed at a weight ratio of 0.5:1 to 1:0.5, and used. Also, when the shape-processing is possible using the plastic waste alone, the railway sleeper may be shape-processed without mixing with the new material.

In addition, any one selected from wooden flour, wooden flour waste, rice husk, corn sludge, palm residue, or a mixture thereof may be used as the wooden powder. In this case, the wooden powder includes cellulose as a main component, and it is known in the related art that the binder of the present invention is useful for promoting an interfacial reaction of such cellulose.

The railway sleeper of the present invention may be manufactured by shape-processing the raw materials as described above.

When the process of mixing the plastic waste, the wooden particles, and the binder and shaping the resulting mixture is performed, the shaping process is preferably performed by mixing 30 to 50% by weight of the plastic waste, 40 to 60% by weight of the wooden particles, and 5 to 10% by weight of the binder. Also, when the new material is mixed, a mixture of the plastic waste and the new material is preferably mixed in a range of 30 to 40% by weight.

In the present invention, when the content of the binder is less than 5% by weight, there is a problem that physical properties may be degraded after shaping because a sufficient bonding force cannot be obtained by a combination of the plastic waste and the wooden particles. On the other hand, when the content of the binder is at least greater than or equal to 5% by weight, a sufficient bonding force may be obtained regardless of the types of the plastic waste and wooden particles, or the blending ratio. Also, when an amount of the binder is too high, because the contents of the plastic waste and wooden particles as the main materials are relatively low, it was found that it was not possible to obtain the strength applicable to the railway sleeper.

In the present invention, a binder including 1 to 3 parts by weight of oxalic acid, 0.5 to 2 parts by weight of sodium hydroxide, 0.1 to 0.5 parts by weight of sodium acetate, and 15 to 20 parts by weight of silicone oil is used as the binder

The oxalic acid is used as an acid component, and the sodium hydroxide is used as a base component. The oxalic acid has a pKa of 1.25, and the sodium hydroxide has a pKa of 15.7. Thus, because a relatively strong acid and weak base are combined to react with each other, there is a difference from the strong acid and the strong base that are combined to react as in the related art such as Korean Patent Publication Nos. 10-1796261 and 10-1796263. This is because they are blended with sodium acetate corresponding to the metal catalyst used in the present invention. Sodium acetate has a pKa of 4.54, which corresponds to a strong acid, and is also expected to serve as the metal catalyst. However, the sodium acetate binds to sodium hydroxide, which generally makes the binder acidic.

However, unlike what is experimentally expected, it was shown that the interfacial reaction between the plastic and the wooden powder is activated by this combination of a strong acid and weak base, thereby causing a bonding reaction.

In particular, it was found that the silicone oil plays an important role in stabilizing the acid and the base in order to prevent the acid and the base from reacting prior to the shaping process. The related art lists sodium-based lignin, calcium-based lignin, mineral oil, paraffin oil, an oil stain (prepared by boiling soybean oil at 200°C or higher for 5 minutes or more, cooling the soybean oil to 60°C, and mixing the soybean oil with paraffin wax), silicone oil (particularly, diphenyl siloxane-based silicone oil), and the like as non-reactive oils. However, according to the present invention, it was found that it is most effective to mix dimethyl silicone oil or methylphenyl silicone oil. The silicone oil is assumed to be effective in delaying a reaction of sodium hydroxide with oxalic acid included in the binder due to a relatively low change in viscosity when the silicone oil is heated to a shaping temperature because the silicone oil has a small change in viscosity according to the temperature.

In the process of shaping and processing the mixture, the railway sleeper may be manufactured by introducing the mixture into an extruder, heating and melting the mixture at 180 to 220°C and extruding the mixture (first extrusion step); introducing the mixture extruded in the first extrusion step into an extruder, heating the mixture to 150 to 210°C in order to preheat the mixture to a predetermined temperature, extruding the mixture into a cavity of a shaping mold (second extrusion step); and after filling the shaping mold with the extruded article, transferring the extruded article to a chamber maintained at a predetermined temperature and slowly cooling the extruded article in the chamber to cure the extruded article.

To evaluate the physical properties of the railway sleeper according to the present invention, a mixture including 40% by weight of plastic waste (in which PE and PVC are mixed), 52% by weight of wooden flour waste, and 8% by weight of a binder was extruded, and then shaped to manufacture a railway sleeper. In this case, different types of binders were used as listed in Table 1, and the mixture was extruded, and then shaped to manufacture railway sleepers. In Table 1, the contents are parts by weight.

**[Table 1]**

| | 1 | 2 | 3 | 4 | 5 | 6 | 7 | 8 |
|---|---|---|---|---|---|---|---|---|
| Oxalic acid | 2 | 2 | | 2 | | | 2 | |
| Acetic acid | | | | | 2 | | | 2 |
| Carboxylic acid | | | 2 | | | 2 | | |
| Sodium hydroxide | 0.8 | 2.5 | | | 0.8 | 1 | | |
| Hydrogen peroxide | | | | 0.8 | | | | 1 |
| Peroxide ester | | | 1 | | | | 0.8 | |
| Sodium acetate | 0.2 | 0.6 | 0.2 | 0.2 | | | | |
| Lithium nitrate | | | | | 0.2 | 0.2 | 0.2 | 0.2 |
| Dimethyl silicone oil | 18 | | 18 | | 16 | | 18 | |
| Methylphenyl silicone oil | | 15 | | 16 | | 16 | | 18 |

The physical properties of the manufactured railway sleepers were measured as follows.
1) Compressive strength: 16-hour compressive strength and 28-day compressive strength were measured by the measurement method according to KRS-TR-0008-11R.
2) Bending strength: Bending strength in a horizontal direction was measured by the measurement method according to KS F 2208.
3) Maximum flexural load: It was measured by the measurement method according to KSF 3230.
4) Flexural creep strain: It was measured by the measurement method according to KSF 3230.
5) Moisture absorption rate: A change in weight was measured by the measurement method according to KS F 3230.
6) Low-temperature impact strength: It was measured by the measurement method according to KS C 8455. In this case, a test specimen was measured after being kept at -20 ± 1°C for 5 hours, and then evaluated as good when there were no cracks and poor when there were cracks.

**[Table 2]**

| | 1 | 2 | 3 | 4 | 5 | 6 | 7 | 8 |
|---|---|---|---|---|---|---|---|---|
| Compressive strength (16 hours, MPa) | 42.8 | 32.9 | 37.8 | 39.2 | 38.6 | 40.2 | 41.2 | 39.6 |
| Compressive strength (28 days, MPa) | 58.2 | 56.0 | 56.8 | 52.5 | 55.0 | 55.4 | 59.7 | 56.2 |
| Bending strength (kgf/cm²) | 848 | 850 | 622 | 612 | 598 | 605 | 623 | 591 |
| Flexural creep strain (%) | 0.12 | 0.16 | 0.25 | 0.22 | 0.15 | 0.22 | 0.25 | 0.18 |
| Moisture absorption rate (%) | 2.0 | 6.2 | 8.5 | 8.0 | 6.8 | 6.2 | 6.5 | 5.9 |
| Maximum flexural load (N) | 48,500 | 40,250 | 38,600 | 32,300 | 28,500 | 29,660 | 42,740 | 35,550 |
| Low-temperature impact strength | Good | Poor | Poor | Good | Good | Good | Poor | Good |

From the results listed in Table 2, it was confirmed that test specimen 1 had a higher 16-hour compressive strength, compared to test specimens 2 to 8, indicating that the compressive strength at the beginning of tension application was improved. However, it was confirmed that all test specimens 1 to 8 had a good 28-day compressive strength in the experiment.

From the results of bending strength measurements, it was confirmed that all test specimens 1 to 8 satisfied the requirement for a bending strength (600 kgf/cm² or more) required for the railway sleepers. In particular, test specimen 1 had a relatively higher bending strength.

From the results of flexural creep strain measurements, it was also confirmed that test specimen 1 had the lowest flexural creep strain of 0.12%, indicating that test specimen 1 exhibited superior structural stability, compared to test specimens 2 to 8.

Also, test specimen 1 had a remarkably low moisture absorption rate of 2.0%, indicating that test specimen 1 exhibited a lower moisture absorption rate, compared to test specimens 2 to 8. These results suggest that test specimen 1 had the highest structural compactness in a molded body.

In addition, from the results of maximum flexural load measurements, it was confirmed that all test specimens 1 to 8 had high maximum flexural load values greater than 3,400 N required for the railway sleepers. In particular, test specimen 1 had a high maximum flexural load value.

Also, from the results of low-temperature impact strength measurements, it was confirmed that test specimens 2, 3, and 7 had poor low-temperature impact strength. In test specimen 2, a binder having the same components as in test specimen 1 was used, but their contents were different. The results suggest that the physical properties after shaping were different according to the ratio of the binder.

From the above experimental results, it can be seen that the physical properties of the manufactured railway sleepers were different according to the components of the binder used during the extrusion molding. The results suggest that a sufficient bonding force between the wooden flour and the plastic waste may be obtained when a suitable binder is used according to the process of shaping the railway sleeper, which makes it possible to manufacture high-quality railway sleepers.

Further, using the binder used in test specimen 1, when the plastic waste (in which PE and PVC were mixed), the wooden flour waste, and the binder were mixed, they were mixed at ratios as shown in Table 3, and the resulting mixture was extrusion-molded to manufacture railway sleepers. In Table 3, the units are percent by weight. Also, PE, PP, and PET are new materials.

**[Table 3]**

| | 1 | 9 | 10 | 11 | 12 | 13 | 14 |
|---|---|---|---|---|---|---|---|
| Plastic waste | 40 | 50 | 30 | 32 | 32 | 28 | 60 |
| Wooden flour waste | 52 | 45 | 45 | 40 | 42 | 66 | 30 |
| Binder | 8 | 5 | 9 | 8 | 6 | 6 | 10 |
| PE | | | 16 | | 10 | | |
| PP | | | | | | | |
| PET | | | | 20 | 10 | | |

The results of measurement of physical properties of the test specimens according to Table 3 are shown in Table 4.

**[Table 4]**

| | 1 | 9 | 10 | 11 | 12 | 13 | 14 |
|---|---|---|---|---|---|---|---|
| Compressive strength (16 hours, MPa) | 42.8 | 43.2 | 41.5 | 40.6 | 43.2 | 40.2 | 38.8 |
| Compressive strength (28 days, MPa) | 58.2 | 56.4 | 57.5 | 58.4 | 55.0 | 52.5 | 50.6 |
| Bending strength (kgf/cm²) | 848 | 830 | 852 | 826 | 852 | 612 | 610 |
| Flexural creep strain (%) | 0.12 | 0.13 | 0.12 | 0.10 | 0.11 | 0.35 | 0.32 |
| Moisture absorption rate (%) | 2.0 | 1.5 | 2.5 | 3.0 | 2.5 | 7.5 | 8.0 |
| Maximum flexural load (N) | 48,500 | 48,000 | 49,500 | 47,450 | 47,550 | 40,550 | 39,900 |
| Low-temperature impact strength | Good | Good | Good | Good | Good | Poor | Poor |

From the results as shown in Table 4, it can be seen that the railway sleepers having excellent physical properties such as compressive strength, bending strength, flexural creep strain, moisture absorption rate, maximum flexural load, and low-temperature impact strength were manufactured when the railway sleepers were shaped using the binder according to the present invention. However, when the content of plastic or wooden flour was too high or small during the shaping of the railway sleepers, as in test specimens 13 and 14, poor physical properties were generally exhibited, and the moisture absorption rate was too high or the low-temperature impact strength was low.

From these results, it can be seen that high-quality railway sleepers may be manufactured using the plastic waste and the wooden flour waste as the raw materials in optimal ranges when the binder according to the present invention is applied to the manufacture of the railway sleepers.

The rights of the present invention are not limited to the embodiments as described above, but are defined by the claims, and it should be apparent to those skilled in the art that various modifications and adaptations can be made without departing from the scope of the claims.

## Claims

1. A railway sleeper comprising plastic waste, wooden particles, and a binder,
wherein the binder comprises 1 to 3 parts by weight of oxalic acid, 0.5 to 2 parts by weight of sodium hydroxide, 0.1 to 0.5 parts by weight of sodium acetate, and 15 to 20 parts by weight of silicone oil.

2. The railway sleeper of claim 1, wherein the wooden particles comprise one selected from wooden flour, a wooden flour waste, rice husk, corn sludge, palm residue, or a mixture thereof.

3. The railway sleeper of claim 1, wherein the plastic waste comprises one selected from polyethylene, polypropylene, polystyrene, polyethylene terephthalate, polyvinyl chloride, or a mixture thereof.

4. The railway sleeper of claim 1, wherein any one or more new materials selected from polyethylene, polypropylene, polystyrene, polyethylene terephthalate, polyvinyl chloride are further mixed.

5. The railway sleeper of claim 4, wherein the plastic waste and the new material are mixed at a weight ratio of 0.5: 1 to 1:0.5.
